# EUROPEAN PATENT SPECIFICATION

(11) **EP 3 275 696 B1**
(45) Date of publication and mention of the grant of the patent: **13.11.2019**
(21) Application number: 16768790.4
(22) Date of filing: 23.03.2016
(51) Int. Cl.: B60C 7/00, B60B 9/04, B60C 1/00, C08K 3/30, C08K 5/40, C08L 21/00, B60C 9/00, B60C 7/18

(54) **NON-PNEUMATIC TIRE**
LUFTLOSER REIFEN
PNEU NON-PNEUMATIQUE

(30) Priority: 24.03.2015 JP 2015060605
(43) Date of publication of application: 31.01.2018
(73) Proprietor: Bridgestone Corporation, Tokyo 104-8340 (JP)
(72) Inventor: HASEGAWA Keiichi, Tokyo 104-8340 (JP); KON Seiji, Tokyo 104-8340 (JP); KOUNO Yoshihide, Tokyo 104-8340 (JP); NISHIDA Masashi, Tokyo 104-8340 (JP); NAKAJIMA Daisuke, Tokyo 104-8340 (JP); TOYOSAWA Shinichi, Tokyo 104-8340 (JP)
(74) Representative: Oxley, Robin John George
(86) International application number: PCT/JP2016/059104
(87) International publication number: WO 2016/152887

(56) References cited:
- JP-A- H09 226 313
- JP-A- 2005 220 251
- JP-A- 2009 035 051
- JP-A- 2009 286 208
- JP-A- 2011 178 308
- JP-A- 2011 219 009
- JP-A- 2012 140 507
- JP-A- 2014 189 084
- JP-A- 2014 218 578
- JP-A- 2015 039 940
- KR-A- 20130 076 304
- US-A1- 2007 114 688
- US-A1- 2010 200 131

## Description

### [Technical Field]

The present invention relates to a non-pneumatic tire in which filling of pressurized air is not necessary, when in use.

Priority is claimed on Japanese Patent Application No. 2015-60605, filed on March 24, 2015.

### [Background Art]

Conventionally, for example, a non-pneumatic tire as described in the following Patent Document 1 is known. The non-pneumatic tire includes an attachment body attached to an axle, an outer cylindrical body which surrounds the attachment body from the outside in a tire radial direction, a tread portion which surrounds the outer cylindrical body from the outside in the tire radial direction, and a coupling member which displaceably couples the attachment body to the outer cylindrical body.

### [Citation List]

### [Patent Document]

### [Patent Document 1]

Japanese Unexamined Patent Application, First Publication No. 2013-86712

Reference is also made to US 2010/0200131, which discloses a non-pneumatic tire according to the preamble of Claim 1.

### [Summary of Invention]

### [Technical Problem]

However, in conventional non-pneumatic tires, there is room for improvement in enhancing durability and expanding the range of selection for a material or shape of each member constituting the non-pneumatic tire such as an outer cylindrical body or a coupling member, for example.

The present invention is made in consideration of the above-described circumstances, and an object of the present invention is to enhance the durability and expand the range of selection for a material or shape of a member.

### [Solution to Problem]

A non-pneumatic tire according to the present invention is defined in claim 1.

### [Effects of the Invention]

According to the present invention, it is possible to enhance durability of a non-pneumatic tire and expand the range of selection for a material or shape of a member.

### [Brief Description of Drawings]

Fig. 1 is a view showing a reference embodiment of a non-pneumatic tire which is not according to the present invention and is a schematic perspective view in which a portion of the non-pneumatic tire is disassembled.
Fig. 2 is a side view of the non-pneumatic tire shown in Fig. 1 when viewed from first side in a tire width direction.
Fig. 3 is an enlarged view showing a main portion of Fig. 2.
Fig. 4 is a tire side view of a first part case body in the non-pneumatic tire shown in Fig. 1 when viewed from first side in the tire width direction or a tire side view of a second part case body when viewed from the second side in the tire width direction.
Fig. 5 is a cross-sectional view taken along the tire width direction of a ring-shaped body of the first part case body or the second part case body shown in Fig. 4.
Fig. 6 is a cross-sectional view taken along the tire width direction of a ring-shaped body of a first part case body or a second part case body constituting a first modified example of the non-pneumatic tire, which is not according to the present invention.
Fig. 7 is a cross-sectional view taken along the tire width direction of a ring-shaped body of a first part case body or a second part case body constituting a second modified example of the non-pneumatic tire, which is not according to the present invention.
Fig. 8 is a cross-sectional view taken along the tire width direction of a ring-shaped body of a first part case body or a second part case body constituting a first example of a non-pneumatic tire according to the present invention.
Fig. 9 is a cross-sectional view taken along the tire width direction of a ring-shaped body of a first part case body or a second part case body constituting a second, modified example of the non-pneumatic tire according to the present invention.
Fig. 10 is a cross-sectional view taken along the tire width direction of a ring-shaped body of a first part case body or a second part case body constituting a third, modified example of the non-pneumatic tire according to the present invention.

### [Description of Embodiments]

Hereinafter, a reference embodiment, which is not according to the present invention will be described with reference to the drawings.

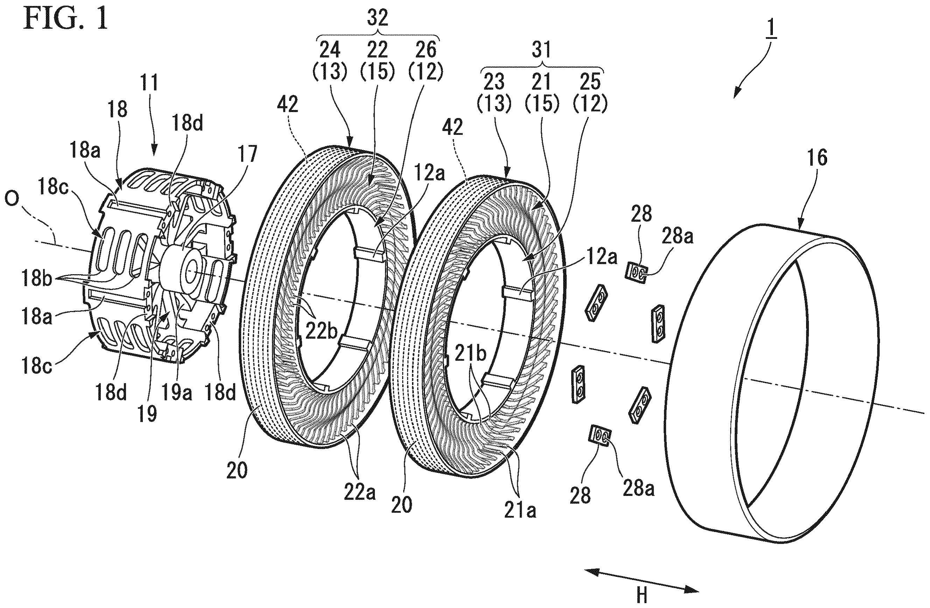

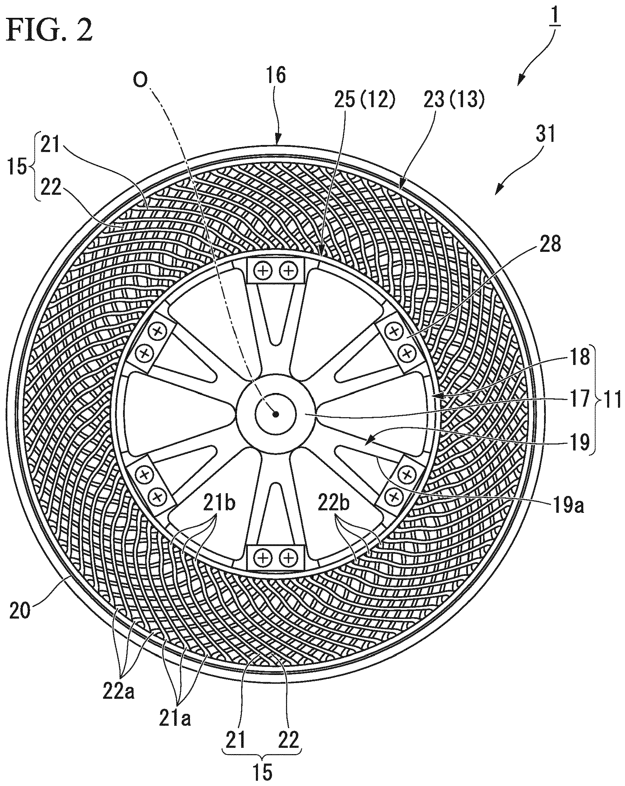

As shown in Figs. 1 and 2, a non-pneumatic tire 1 of the present embodiment includes an attachment body 11 attached to an axle (not shown), a cylindrical ring-shaped body 13 (an outer cylindrical body) which surrounds the attachment body 11 from the outside in a tire radial direction, a plurality of coupling members 15 arranged in a tire circumferential direction between the attachment body 11 and the ring-shaped body 13 and configured to couple the attachment body 11 to the ring-shaped body 13 in an elastically relatively displaceable manner, and a cylindrical tread portion 16 which is wrapped externally around the ring-shaped body 13.

Also, the non-pneumatic tire 1 of the present embodiment may be employed for a small-sized vehicle traveling at a low speed such as a handle type electric wheelchair specified in Japanese Industrial Standard JIS T 9208, for example. In addition, the size of the non-pneumatic tire 1 is not particularly limited, and may be in a range of 3.00 to 8 or the like, for example. Also, the non-pneumatic tire 1 may be employed for passenger cars. The size in this case is not particularly limited, and may be 155/65R 13 or the like, for example.

The above-described attachment body 11, the ring-shaped body 13, and the tread portion 16 are coaxially arranged on a common axis. Hereinafter, this common axis is defined as an axis O, a direction along the axis O is defined as a tire width direction H, a direction perpendicular to the axis O is defined as a tire radial direction, and a direction of revolving around the axis O is defined as a tire circumferential direction. Also, central portions in the tire width direction H of the attachment body 11, the ring-shaped body 13, and the tread portion 16 are arranged in a state of being aligned with each other.

A fitting cylinder portion 17 to which a distal end of the axle is fitted, an outer ring portion 18 which surrounds the fitting cylinder portion 17 from the outside in the tire radial direction, and a plurality of ribs 19 which couple the fitting cylinder portion 17 to the outer ring portion 18 are provided in the attachment body 11.

The fitting cylinder portion 17, the outer ring portion 18, and the ribs 19 are integrally formed of a metal material such as an aluminum alloy, for example. The fitting cylinder portion 17 and the outer ring portion 18 are formed in a cylindrical shape and are coaxially arranged on the axis O. The plurality of ribs 19 are disposed at regular intervals in the circumferential direction, for example.

A plurality of key groove portions 18a recessed toward the inside in the tire radial direction and configured to extend in the tire width direction H are formed on an outer circumferential surface of the outer ring portion 18 at intervals in the tire circumferential direction. On the outer circumferential surface of the outer ring portion 18, the key groove portions 18a are open only on the first side (outside the vehicle body) in the tire width direction H and are closed on the second side (inside the vehicle body) in the tire width direction H.

In the outer ring portion 18, a plurality of lightening holes 18b penetrating through the outer ring portion 18 in the tire radial direction are formed at intervals in the tire width direction H at portions positioned between key groove portions 18a adjacent to each other in the tire circumferential direction. A plurality of hole rows 18c constituted by the plurality of lightening holes 18b are formed at intervals in the tire circumferential direction. Similarly, a lightening hole 19a penetrating through the ribs 19 in the tire width direction H is also formed in each of the ribs 19.

A concave portion 18d into which a plate 28 having a through hole 28a is fitted is formed at a position corresponding to the key groove portions 18a at an end edge on a first side in the tire width direction H of the outer ring portion 18. The concave portion 18d is recessed toward a second side in the tire width direction H. Also, on a wall surface facing the first side in the tire width direction H among wall surfaces constituting the concave portion 18d, an internal thread portion communicating with the through hole 28a of the plate 28 that is fitted into the concave portion 18d is formed.

Also, a plurality of through holes 28a are formed in the plate 28 at intervals in the tire circumferential direction.

Similarly, a plurality of internal thread portions are formed on the wall surface of the concave portion 18d at intervals in the tire circumferential direction. In the shown example, a case in which two through holes 28a and two internal thread portions are formed is taken as an example, but the number is not limited to two.

A cylindrical exterior body 12 is fitted to the outside of the attachment body 11. A ridge portion 12a protruding toward the inside in the tire radial direction and extending over the entire length in the tire width direction H is formed on an inner circumferential surface of the exterior body 12. A plurality of ridge portions 12a are formed on the inner circumferential surface of the exterior body 12 at intervals in the tire circumferential direction and respectively engaged with the key groove portions 18a formed on the attachment body 11.

Thus, the exterior body 12 is fixed to the attachment body 11 by screwing bolts (not shown) into the internal thread portions through the through holes 28a of the plate 28 fitted into the concave portion 18d in a state in which the ridge portion 12a is engaged with the key groove portion 18a.

Also, among wall surfaces constituting the key groove portion 18a, a pair of side walls facing each other in the tire circumferential direction are formed to be perpendicular to a bottom wall surface. Similarly, among outer surfaces of the ridge portion 12a, a pair of side wall surfaces erected from the inner circumferential surface of the exterior body 12 and a top wall surface facing the inside in the tire radial direction are formed to be perpendicular to each other. Therefore, the sizes in the tire circumferential direction of the ridge portion 12a and the key groove portion 18a are equal to each other.

With the configuration as above, the ridge portion 12a is precisely engaged with the key groove portion 18a with little rattling.

The coupling member 15 couples an outer circumferential surface side of the attachment body 11 to an inner circumferential surface side of the ring-shaped body 13 in an elastically relatively displaceable manner. In the shown example, the coupling member 15 includes a first coupling plate 21 and a second coupling plate 22 which couple an outer circumferential surface of the exterior body 12 fitted to the attachment body 11 from the outside to the inner circumferential surface of the ring-shaped body 13. Both of the first coupling plate 21 and the second coupling plate 22 are formed of an elastically deformable plate.

A plurality of first coupling plates 21 are disposed in the tire circumferential direction at positions on the first side in the tire width direction H. A plurality of second coupling plates 22 are disposed in the tire circumferential direction at positions on the second side in the tire width direction H. That is, the plurality of first coupling plates 21 and second coupling plates 22 are disposed at intervals from each other in the tire width direction H and are disposed in the tire circumferential direction at respective positions. For example, 60 of the first coupling plates 21 and the second coupling plates 22 may be respectively provided in the tire circumferential direction.

A plurality of coupling members 15 are respectively disposed at positions rotationally symmetrical with respect to the axis O between the exterior body 12 and the ring-shaped bodies 13. Also, all the coupling members 15 have the same shape and the same size, and the width of the coupling members 15 in the tire width direction H is smaller than the width of the ring-shaped body 13 in the tire width direction H.

Therefore, adjacent first coupling plates 21 in the tire circumferential direction are not in contact with each other. Similarly, adjacent second coupling plates 22 in the tire circumferential direction are not in contact with each other. Also, adjacent first coupling plates 21 and second coupling plates 22 in the tire width direction H are not in contact with each other. In addition, the first coupling plates 21 and the second coupling plates 22 have the same width in the tire width direction H and thickness.

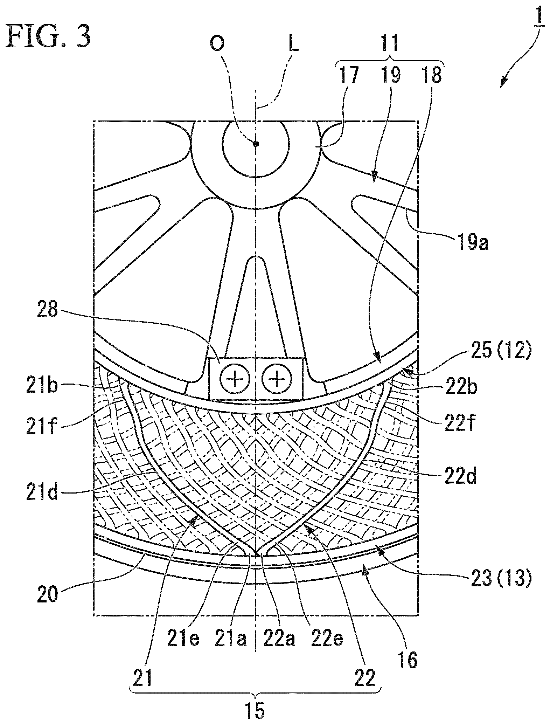

As shown in Fig. 3, in the first coupling plate 21, a first end portion (an outer end portion) 21a coupled to the ring-shaped body 13 is positioned on the first side in the tire circumferential direction of a second end portion (an inner end portion) 21b coupled to the exterior body 12. On the other hand, in the second coupling plate 22, the first end portion (an outer end portion) 22a coupled to the ring-shaped body 13 is positioned on the second side in the tire circumferential direction of the second end portion (an inner end portion) 22b coupled to the exterior body 12.

Therefore, the respective first end portions 21 a and 22a of the first coupling plate 21 and the second coupling plate 22 which constitute one coupling member 15 are coupled to the same position on the inner circumferential surface of the ring-shaped bodies 13 in the tire circumferential direction in a state in which their positions in the tire width direction H are different from each other.

A plurality of curved portions 21d to 21f, and 22d to 22f which are curved in the tire circumferential direction are formed in the first coupling plate 21 and the second coupling plate 22 at intermediate portions positioned between the first end portions 21a and 22a and the second end portions 21b and 22b.

The plurality of curved portions 21d to 21f and 22d to 22f are formed along an extending direction in which the first coupling plate 21 and the second coupling plate 22 extend in a tire side view when the non-pneumatic tire 1 is viewed from the tire width direction H. In the shown example, the plurality of curved portions 21d to 21f in the first coupling plate 21 and the plurality of curved portions 22d to 22f in the second coupling plate 22 are adjacent to each other in the extending direction while having curvature directions opposite to each other.

The plurality of curved portions 21d to 21f formed in the first coupling plate 21 include a first curved portion 21d curved to protrude toward the second side in the tire circumferential direction, a second curved portion 21e positioned between the first curved portion 21d and the first end portion 21a and curved to protrude toward the first side in the tire circumferential direction, and a third curved portion 21f positioned between the first curved portion 21d and the second end portion 21b and curved to protrude toward the first side in the tire circumferential direction. The second curved portion 21 e is continuous with the first end portion 21 a.

The plurality of curved portions 22d to 22f formed in the second coupling plate 22 include a first curved portion 22d curved to protrude toward the first side in the tire circumferential direction, a second curved portion 22e positioned between the first curved portion 22d and the first end portion 22a and curved to protrude toward the second side in the tire circumferential direction, and a third curved portion 22f positioned between the first curved portion 22d and the second end portion 22b and curved to protrude toward the second side in the tire circumferential direction. The second curved portion 22e is continuous with the first end portion 22a.

In the shown example, the radii of curvature of the first curved portions 21d and 22d in a tire side view are larger than those of the second curved portions 21e and 22e and the third curved portions 21f and 22f, and the first curved portions 21 d and 22d are disposed at central portions in the extending directions of the first coupling plate 21 and the second coupling plate 22.

The lengths of the first coupling plate 21 and the second coupling plate 22 are equal to each other. The second end portions 21b and 22b of the first coupling plate 21 and the second coupling plate 22 are coupled, in a tire side view, to respective positions at the same distance on the first side and the second side in the tire circumferential direction about the axis O on the outer circumferential surface of the exterior body 12 from a position facing the first end portions 21a and 22a in the tire radial direction.

Specifically, the second end portions 21b and 22b of the first coupling plate 21 and the second coupling plate 22 are coupled to the outer circumferential surface of the exterior body 12 so that the angle formed by a line connecting the first end portion 21a and the second end portion 21b of the first coupling plate 21 and a line connecting the first end portion 22a and the second end portion 22b of the second coupling plate 22 is at, for example, 20° or more and 135° or less.

Also, the first curved portions 21d and 22d, the second curved portions 21e and 22e, and the third curved portions 21f and 22f in each of the first coupling plate 21 and the second coupling plate 22 have respective protruding directions which are opposite to each other in the tire circumferential direction while they are the same in size.

With the configuration as above, as shown in Fig. 3, a shape of each coupling member 15 in a tire side view is symmetrical with respect to a virtual line L extending in the tire radial direction and passing through the first end portions 21a and 22a of the respective first coupling plate 21 and second coupling plate 22.

The above-described exterior body 12, the ring-shaped bodies 13, and the plurality of coupling members 15 are integrally formed of a synthetic resin material, for example. The synthetic resin material may be, for example, a single resin material, a mixture containing two or more kinds of resin material, or a mixture containing one or more kinds of resin material and one or more kinds of elastomer, and furthermore, may include additives such as anti-aging agents, plasticizers, fillers, or pigments, for example. As the synthetic resin material, for example, an acrylonitrile-butadiene-styrene (ABS) resin, polyphenylene sulfide (PPS), nylon 6 (N 6), nylon 66 (N 66), amide-based thermoplastic elastomers (TPA), or the like can be employed.

Incidentally, as shown in Fig. 1, the exterior body 12 is divided into a first exterior body 25 positioned on the first side in the tire width direction H and a second exterior body 26 positioned on the second side in the tire width direction H. Similarly, the ring-shaped body 13 is divided into a first ring-shaped body 23 positioned on the first side in the tire width direction H and a second ring-shaped body 24 positioned on the second side in the tire width direction H.

In the shown example, each of the exterior body 12 and the ring-shaped body 13 is divided at the central portion in the tire width direction H.

Then, the first exterior body 25 and the first ring-shaped body 23 are integrally formed with the first coupling plate 21, for example, by injection molding. The second exterior body 26 and the second ring-shaped body 24 are integrally formed with the second coupling plate 22, for example, by injection molding.

Hereinafter, a unit in which the first exterior body 25, the first ring-shaped body 23, and the first coupling plate 21 are integrally formed is referred to as a first part case body 31, and a unit in which the second exterior body 26, the second ring-shaped body 24, and the second coupling plate 22 are integrally formed is referred to as a second part case body 32.

Also, when the first part case body 31 is taken as an example, injection molding methods available to be used include a general method of molding the entire first part case body 31 at once, insert molding in which the remaining portions other than insert parts are injection molded with some portions among the first exterior body 25, the first ring-shaped body 23, and the first coupling plate 21 being provided as the insert parts, a so-called two-color molding, or the like. In addition, when the entirety of the first part case body 31 is injection-molded at once, the plurality of ridge portions 12a formed on the exterior body 12 may be used as a gate portion.

These points apply to the second part case body 32.

Also, at the time of injection-molding, when the first part case body 31 is taken as an example, the first exterior body 25, the first ring-shaped body 23, and the first coupling plate 21 may be formed of different materials, and may be formed of the same material. As such a material, metal materials or resin materials are examples, however, resin materials, particularly thermoplastic resins, are preferable from the perspective of reducing weight.

These points apply to the second part case body 32.

In each of the first part case body 31 and the second part case body 32, the central portion in the tire width direction H of the first coupling plate 21 and the second coupling plate 22, the central portion in the tire width direction of the first ring-shaped body 23 and the second ring-shaped body 24, and the central portion in the tire width direction H of the first exterior body 25 and the second exterior body 26 are disposed at an equivalent position in the tire width direction H.

However, the present invention is not limited thereto, and, in each of the first part case body 31 and the second part case body 32, a central portion in the tire width direction H of the first coupling plate 21 and the second coupling plate 22 may be positioned on an inner side (a center side) in the tire width direction H relative to a central portion in the tire width direction H of the first ring-shaped body 23 and the second ring-shaped body 24. Also, a central portion in the tire width direction H of the first exterior body 25 and the second exterior body 26 may be on the inner side in the tire width direction H relative to the central portion in the tire width direction H of the first coupling plate 21 and the second coupling plate 22.

The first ring-shaped body 23 and the second ring-shaped body 24 are coupled to each other, by welding, fusing, or bonding end edges thereof facing each other in the tire width direction H, for example. Also, in the case of welding, hot plate welding may be employed, for example. Similarly, end edges of the first exterior body 25 and the second exterior body 26 facing each other in the tire width direction H are in contact with each other.

However, the first exterior body 25 and the second exterior body 26 may be formed to have smaller widths in the tire width direction H than those of the first ring-shaped body 23 and the second ring-shaped body 24.

In this case, the end edges of the first exterior body 25 and the second exterior body 26 facing each other in the tire width direction H are separated in the tire width direction H when the first part case body 31 and the second part case body 32 are coupled. Therefore, it is possible to prevent, for example, burrs from being generated on the inner circumferential surface of the exterior body 12 fitted to the attachment body 11 from the outside.

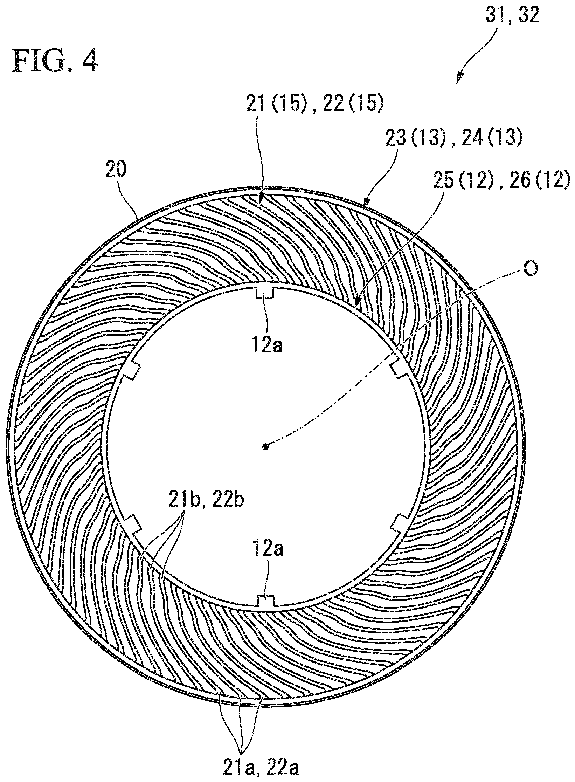

As shown in Fig. 4, the first part case body 31 and the second part case body 32 have the same shape and the same size. Also, when the first part case body 31 and the second part case body 32 are integrally coupled as described above, end edges of the first ring-shaped body 23 and the second ring-shaped body 24 abut each other in the tire width direction H and are coupled in a state in which directions of the first part case body 31 and the second part case body 32 are opposite to each other in the tire width direction H while the first part case body 31 and the second part case body 32 are positioned in the tire circumferential direction so that each of the coupling members 15 is line-symmetrical in the tire side view as described above.

Thereafter, the non-pneumatic tire 1 can be obtained by providing the tread portion 16 to the first part case body 31 and the second part case body 32 which are integrally combined.

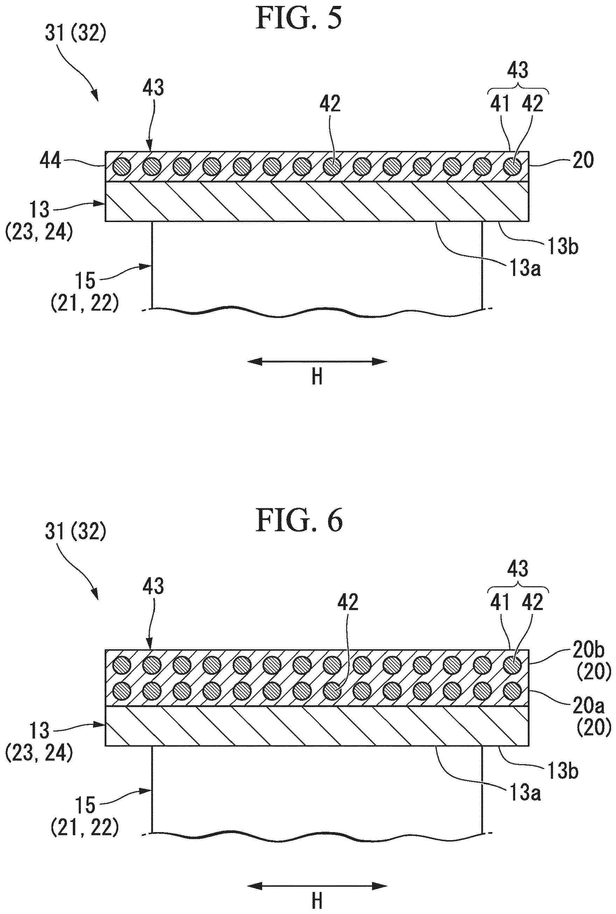

Here, as shown in Fig. 5, a spiral reinforcing layer 20 is bonded to an outer circumferential surface of the ring-shaped body 13. The spiral reinforcing layer 20 is formed by spirally winding an element wire body 43 in which one cord 42 is embedded in a covering body 41 formed of, for example, a resin material or the like, on the outer circumferential surface of the ring-shaped body 13. Since the element wire bodies 43 are spirally wound on the outer circumferential surface of the ring-shaped body 13, the element wire bodies 43 are adjacent to each other in the tire width direction H on the outer circumferential surface. Since the covering bodies 41 at a portion in which the element wire bodies 43 are adjacent to each other in the tire width direction H are integrally fixed in the tire width direction H, a base layer 44 made of the covering bodies 41 is formed on the outer circumferential surface of the ring-shaped body 13. The spiral reinforcing layer 20 is formed by one spirally extending cord 42 embedded in the base layer 44. As the cord 42, a steel cord or the like is an example.

The spiral reinforcing layer 20 is bonded at least to an outer circumferential surface of an avoidance portion 13b in which a coupling portion 13a with the coupling members 15 (the first coupling plate 21 and the second coupling plate 22) is avoided in the ring-shaped body 13, and, in the present embodiment, is bonded over the entire region of the outer circumferential surface of the ring-shaped body 13. In the shown example, the avoidance portion 13b of the ring-shaped body 13 is opposite end portions in the tire width direction H of the first ring-shaped body 23 or the second ring-shaped body 24 which is the ring-shaped body 13 of the first part case body 31 or the second part case body 32, and the coupling portion 13a of the ring-shaped body 13 is the central portion in the tire width direction H of the first ring-shaped body 23 or the second ring-shaped body 24. That is, the avoidance portion 13b of the ring-shaped body 13 is a portion other than the coupling portion 13a with the coupling members 15 in a cross-sectional view of the ring-shaped body 13 in the tire width direction H.

In the present embodiment, the spiral reinforcing layer 20 is provided on the first ring-shaped body 23 or the second ring-shaped body 24. The size of the element wire body 43 in the tire width direction H is smaller than the size of the first ring-shaped body 23 or the second ring-shaped body 24 in the tire width direction H. The spiral reinforcing layer 20 has a single layer structure in which one layer is provided on the outer circumferential surface of the ring-shaped body 13.

As an example of a method of bonding the spiral reinforcing layer 20 to the outer circumferential surface of the ring-shaped body 13, the following method is an example.

As a first method, a method in which the element wire body 43 is welded to the outer circumferential surface of the ring-shaped body 13 to form the spiral reinforcing layer 20 is an example.

In this method, first, each of the covering body 41 of the element wire body 43 and the outer circumferential surface of the ring-shaped body 13 are heated and melted, and an end portion of the element wire body 43 is welded to the outer circumferential surface of the ring-shaped body 13. Thereafter, while continuing the heating, while rotating the first part case body 31 (or the second part case body 32) around the axis O, the element wire body 43 is moved in the tire width direction H with respect to the first part case body 31 (or the second part case body 32) and wound on the outer circumferential surface of the ring-shaped body 13. Thereby, the element wire body 43 is spirally wound on the ring-shaped body 13 and the spiral reinforcing layer 20 is formed. In such a spiral reinforcing layer 20, positions of opposite end portions in a length direction of the element wire body 43 are shifted in the tire width direction H and the opposite end portions are not joined to each other.

Further, a melting point of the covering body 41 and a melting point of the ring-shaped body 13 may be equal to each other, and in this case, the element wire body 43 can be reliably welded to the ring-shaped body 13.

As a second method, a method in which the spiral reinforcing layer 20 is vulcanization-bonded to the outer circumferential surface of the ring-shaped body 13 is an example.

In this method, the covering body 41 is formed of a rubber composition containing a thiuram-based vulcanization accelerator, and the cord 42 is formed with a steel cord. In the rubber composition, 5 parts or more by mass of sulfur is mixed in with respect to 100 parts by mass of the rubber component. Further, a cobalt compound is added to the rubber composition and/or a cobalt compound treatment is applied to a surface of the steel cord. Furthermore, a primer treatment is applied to form a primer layer on the outer circumferential surface of the ring-shaped body 13. It is preferable that the primer layer be formed of a resorcin compound.

In this method, the spiral reinforcing layer 20 is formed by spirally winding the element wire body 43 on the outer circumferential surface of the ring-shaped body 13, and then the entire first part case body 31 (or second part case body 32) is heated and pressurized in a mold and the spiral reinforcing layer 20 is vulcanization-bonded to the outer circumferential surface of the ring-shaped body 13. The vulcanization temperature at this time is preferably 110 °C or less.

Incidentally, the cobalt compound treatment on the surface of the steel cord can be implemented by washing a steel wire constituting the steel cord with an aqueous solution containing a cobalt salt and then twisting a plurality of steel wires. As the cobalt salt, cobalt chloride, cobalt nitrate, cobalt sulfate, cobalt acetate, cobalt citrate, cobalt gluconate, acetylacetonato cobalt, or the like is an example. It is preferable that the pH of the aqueous solution containing the cobalt salt be in a range of 5 to 8. In addition, brass plating may be applied to the steel wire.

As shown in Fig. 1, the tread portion 16 is formed in a cylindrical shape and integrally covers the outer circumferential surface side of the ring-shaped body 13 over the entire region. An inner circumferential surface of the tread portion 16 is in close contact with the outer circumferential surface of the ring-shaped body 13 over the entire region via the spiral reinforcing layer 20. The tread portion 16 is formed of a natural rubber and/or a vulcanized rubber in which the rubber composition is vulcanized, a thermoplastic material, or the like, for example.

As the thermoplastic material, a thermoplastic elastomer, a thermoplastic resin, or the like is an example. As thermoplastic elastomers, amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), a thermoplastic rubber cross-linker (TPV), other thermoplastic elastomers (TPZ), or the like, specified in Japanese Industrial Standard JIS K6418, are examples.

As the thermoplastic resin, urethane resins, olefin resins, vinyl chloride resins, polyamide resins, or the like are examples. Also, it is preferable to form the tread portion 16 with a vulcanized rubber from the perspective of wear resistance.

As described above, according to the non-pneumatic tire 1 according to the present embodiment, since the spiral reinforcing layer 20 is bonded to the outer circumferential surface of the ring-shaped body 13, rigidity of the ring-shaped body 13 can be enhanced. Thereby, it is possible to enhance durability of the non-pneumatic tire 1 even in a case of being used in an environment such as when the non-pneumatic tire 1 receives a large input from a road surface or protrusions on the road surface stick into the tread portion 16 of the non-pneumatic tire 1, for example.

Since the spiral reinforcing layer 20 is formed by spirally winding the element wire body 43 on the outer circumferential surface of the ring-shaped body 13, it is possible for excessively high rigidity of the ring-shaped body 13 to be suppresses as compared with a case in which a reinforcing ring is fitted to the outer circumferential surface of the ring-shaped body 13, for example, and the thickness of the spiral reinforcing layer 20 can easily be made to be uniform over the entire region as compared with a case in which circumferential end portions of strip-shaped members extending in the tire circumferential direction overlap each other.

Further, since the rigidity of the ring-shaped body 13 can be enhanced by providing the spiral reinforcing layer 20, it is possible to adjust the rigidity of the ring-shaped body 13 regardless of a material or shape of each member other than the spiral reinforcing layer 20 and, for example, it is possible to adjust characteristics such as a longitudinal spring constant of the non-pneumatic tire 1. Therefore, it is possible to expand the range of selection for a material or shape of each member other than the spiral reinforcing layer 20 while securing the characteristics of the non-pneumatic tire 1 using the spiral reinforcing layer 20. Further, in a case in which a material of each member other than the spiral reinforcing layer 20 is changed to enhance the rigidity of the ring-shaped body 13 without providing the spiral reinforcing layer 20, there is a possibility that an unexpected influence on other characteristics may occur, and, when a shape of each member is changed, for example, there is a possibility that time will be taken and an economic burden generated when adjusting the manufacturing apparatus.

In addition, since the spiral reinforcing layer 20 is formed by spirally winding the element wire body 43 on the outer circumferential surface of the ring-shaped body 13, in a state in which the tread portion 16 is removed, the cord 42 can be easily separated from the ring-shaped body 13, for example, by pulling the cord 42 from the end portion thereof against the ring-shaped body 13 to unwind the cord 42 with respect to the ring-shaped body 13, and thereby excellent recyclability can be provided.

Since the spiral reinforcing layer 20 is bonded to an outer circumferential surface of an avoidance portion 13b in which a coupling portion 13a with the coupling member 15 is avoided in the ring-shaped body 13, it is possible to effectively enhance the rigidity of the ring-shaped body 13 and it is possible to reliably enhance durability of the non-pneumatic tire 1.

Here, the spiral reinforcing layer 20 is vulcanization-bonded to the outer circumferential surface of the ring-shaped body 13. Therefore, the steel cord can be firmly bonded to the outer circumferential surface of the ring-shaped body 13 while securing productivity as compared with a case in which, for example, the steel cord is bonded to the outer circumferential surface of the ring-shaped body 13 via an adhesive or fixed to the outer circumferential surface of the ring-shaped body 13 by thermal welding.

In addition, since the covering body 41 is formed of a rubber composition containing a thiuram-based vulcanization accelerator, the rubber composition can be vulcanized at a low temperature (for example, less than 140°C). Therefore, for example, even when the ring-shaped body 13 and the coupling member 15 are formed of a synthetic resin material or the like, a vulcanization temperature of the spiral reinforcing layer 20 can be made lower than a glass transition point of the material forming the ring-shaped body 13 and the coupling member 15. Thereby, when the spiral reinforcing layer 20 is vulcanization-bonded to the ring-shaped body 13, it is possible to suppress an influence of the heating on the ring-shaped body 13 and the coupling member 15.

Further, since the cobalt compound is contained in the rubber composition or the surface of the steel cord is treated with the cobalt compound, a bonding property between the rubber composition and the steel cord can be secured.

As described above, it is possible to firmly bond the steel cord to the ring-shaped body 13 via the rubber composition while suppressing an influence of vulcanization with respect to the ring-shaped body 13 and the coupling member 15, and thus it is possible to enhance running durability of the non-pneumatic tire 1.

In addition, since the primer treatment is applied to form the primer layer on the outer circumferential surface of the ring-shaped body 13, the spiral reinforcing layer 20 can be firmly vulcanization-bonded to the outer circumferential surface of the ring-shaped body 13.

Further, since the primer layer is formed of a resorcin compound, the spiral reinforcing layer 20 can be more firmly vulcanization-bonded to the outer circumferential surface of the ring-shaped body 13.

Also, since 5 parts or more by mass of sulfur with respect to 100 parts by mass of the rubber component is mixed in the rubber composition, the rubber composition can be reliably vulcanized at a low temperature.

Further, since the spiral reinforcing layer 20 is vulcanized at 110°C or less, for example, it is possible to secure a shape of the ring-shaped body 13 and the coupling member 15 with high accuracy, or the like.

The technical scope of the present invention is not limited to the above embodiments, and various modifications can be made without departing from the scope of the present invention defined in the claims.

For example, as the spiral reinforcing layer 20, configurations shown in Figs. 6 to 10 may be employed.

In a first modified example shown in Fig. 6, the spiral reinforcing layer 20 has a two-layer structure (multilayer structure) over the entire region. In this case, an inner layer 20a which is the spiral reinforcing layer 20 positioned on an inner side in the tire radial direction and an outer layer 20b which is the spiral reinforcing layer 20 positioned on an outer side thereof may be opposite to each other in the tire width direction H in which the element wire body 43 is moved with respect to the ring-shaped body 13 at the time of winding the element wire body 43.

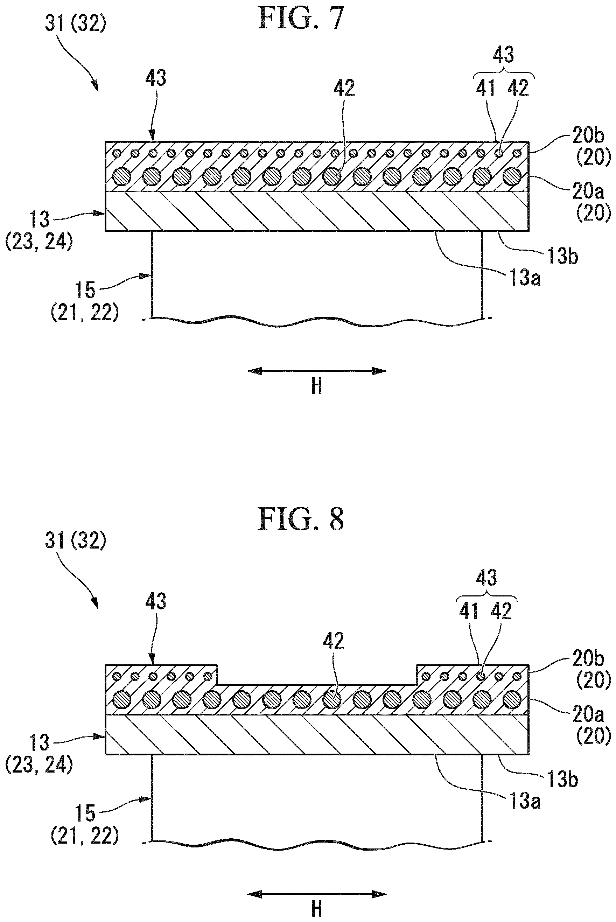

In a second modified example shown in Fig. 7, the spiral reinforcing layer 20 has a two-layer structure as in the first modified example, but an outer diameter of the cord 42 of the element wire body 43 is different between the inner layer 20a and the outer layer 20b. In the shown example, the outer diameter of the cord 42 of the inner layer 20a is greater than the outer diameter of the cord 42 of the outer layer 20b.

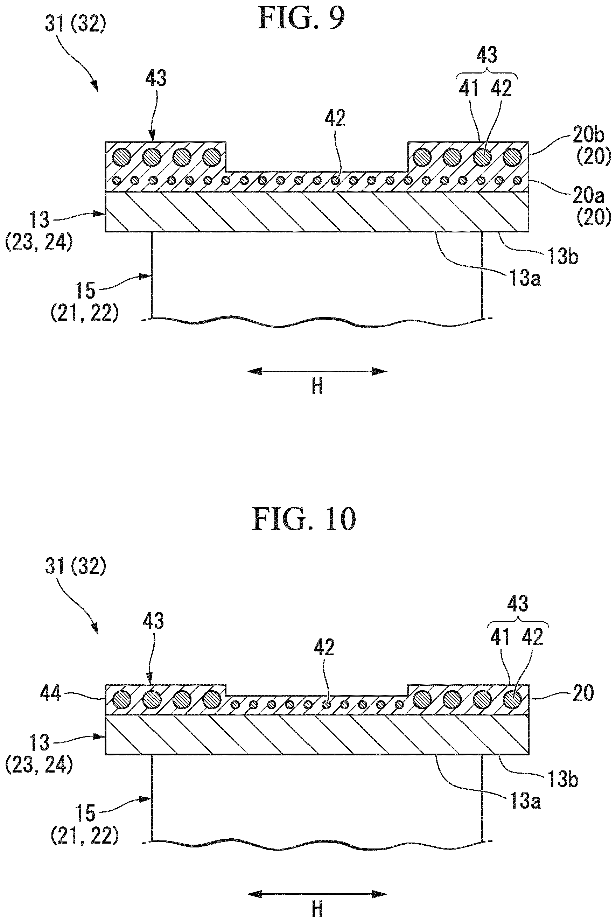

In a first example of the invention shown in Fig. 8 and a second, modified example of the invention shown in Fig. 9, the spiral reinforcing layer 20 has a partially two-layered structure. The outer layer 20b is disposed to be limited to opposite end portions of the inner layer 20a in the tire width direction H. Thereby, a portion of the spiral reinforcing layer 20 bonded to the outer circumferential surface of the avoidance portion 13b of the ring-shaped body 13 is thicker than other portions, and thus the rigidity of the ring-shaped body 13 is effectively enhanced. In the first example, the outer diameter of the cord 42 of the inner layer 20a is greater than the outer diameter of the cord 42 of the outer layer 20b, whereas, in the second, modified example, the outer diameter of the cord 42 of the inner layer 20a is smaller than the outer diameter of the cord 42 of the outer layer 20b.

In a third, modified example shown in Fig. 10, while the spiral reinforcing layer 20 is one layer, the outer diameter of the cord 42 varies depending on a position in the tire width direction H. In the spiral reinforcing layer 20, the outer diameter of the cord 42 positioned on an outer side in the tire width direction H is greater than the outer diameter of the cord 42 positioned in a center portion in the tire width direction H. Thereby, a portion of the spiral reinforcing layer 20 bonded to the outer circumferential surface of the avoidance portion 13b of the ring-shaped body 13 is thicker than other portions.

According to the present invention and in the above-described embodiment, the spiral reinforcing layer 20 is bonded over the entire region of the outer circumferential surface of the ring-shaped body 13.

In addition, as the element wire body 43, it is also possible to employ a configuration in which a plurality of cords 42 which are parallel to each other in the tire width direction H are embedded in the covering body 41. In this case, in the spiral reinforcing layer 20, the plurality of cords 42 parallel to each other are spirally wound on the outer circumferential surface of the ring-shaped body 13.

In addition, although the configuration of the coupling member 15 being provided with one of each of the first coupling plate 21 and the second coupling plate 22 has been described in the above-described embodiment, instead of this, a plurality of first coupling plates 21 and second coupling plates 22 having different positions from each other in the tire width direction H may be provided for one coupling member 15. Also, a plurality of coupling members 15 may be provided between the exterior body 12 and the ring-shaped body 13 in the tire width direction H.

Also, instead of the above-described embodiment, for example, the second end portions 21b and 22b of the first coupling plate 21 and the second coupling plate 22 may be coupled to each of opposite positions with the axis O therebetween in the tire radial direction on the outer circumferential surface of the exterior body 12 or may be coupled to positions, on the outer circumferential surface of the exterior body 12, facing the first end portions 21 a and 22a of the first coupling plate 21 and the second coupling plate 22 in the tire radial direction, or the like. In addition, instead of the above-described embodiment, the first end portions 21a and 22a of the first coupling plate 21 and the second coupling plate 22 may be coupled to the inner circumferential surface of the ring-shaped body 13 while positions thereof in the tire circumferential direction are made to be different from each other.

Further, in the above-described embodiment, a gap in the tire width direction H may or may not be provided between the first exterior body 25 and the second exterior body 26. Also, the exterior body 12 and the ring-shaped body 13 may or may not be divided into three or more in the tire width direction H.

In addition, in the above-described embodiment, the exterior body 12, the ring-shaped body 13, and the coupling member 15 are integrally formed by injection molding, for example, but the present invention is not limited to injection molding, and they may be integrally formed by casting or the like, for example. Also, the exterior body 12, the ring-shaped body 13, and the coupling member 15 may be individually formed and coupled to each other.

In addition, the exterior body 12 and the attachment body 11 may be integrally formed. That is, the exterior body 12 may be included in the attachment body 11.

Further, in the above-described embodiment, the configuration in which the coupling member 15 is indirectly couple to the attachment body 11 with the exterior body 12 interposed therebetween is employed, but the present invention is not limited thereto, and a configuration in which the coupling member 15 is directly coupled to the attachment body 11 may be employed, for example.

In addition, each configuration (constituent element) described in the above embodiments, modified examples, rewritings, or the like may be combined within a range not departing from the scope of the present invention defined by the claims, and additions, omissions, substitutions, and other changes to the configuration are possible. In addition, the present invention is not limited by the embodiments described above, and is limited only by the claims.

Next, a verification test on the operation and effects described above was conducted. In this verification test, running durability based on the bonding strength of the steel cord with respect to the ring-shaped body was verified.

In this verification test, in each of non-pneumatic tires of examples and comparative examples, a rubber composition and a steel cord which constitute the spiral reinforcing layer were made to be different or a bonding method of the steel cord with respect to the ring-shaped body was varied.

As the rubber composition, rubber compositions made from formulations A to D shown in Table 1 were employed.

**[Table 1]**

| | | A | B | c | D |
|---|---|---|---|---|---|
| Formulation of rubber composition (parts by mass) | Natural rubber | 100 | 100 | 100 | 100 |
| | Carbon black (HAF) | 50 | 50 | 50 | 50 |
| | Zinc oxide | 7.5 | 7.5 | 7.5 | 7.5 |
| | Stearic acid | 0.5 | 0.5 | 0.5 | 0.5 |
| | Vulcanization accelerator (1) | 1 | 1 | 1 | 1 |
| | Sulfur | 6 | 6 | 6 | 6 |
| | Antioxidant | 4 | 4 | 4 | 0 |
| | Vulcanization accelerator (2) | 0 | 0.2 | 0.2 | 0 |
| | Cobalt compound | 1 | 1 | 0 | 0 |

As the "vulcanization accelerator (1)" in Table 1, "NOCCELER DZ" (N, N'-dicyclohexyl-2-benzothiazole sulfenamide) manufactured by Ouchi Shinko Chemical Industrial Co., Ltd. was employed. As the "antioxidant", "NOCRAC 6C" (N-phenyl-N'-(1,3-dimethylbutyl)-p-phenylenediamine) manufactured by Ouchi Shinko Chemical Industrial Co., Ltd. was employed. As the "vulcanization accelerator (2)", "NOCCELER-TOT-N" (tetrakis(2-ethylhexyl)thiuram disulfide) manufactured by Ouchi Shinko Chemical Industrial Co., Ltd. was employed. The vulcanization accelerator (2) is a thiuram-based vulcanization accelerator. For the "cobalt compound", "Manobond C 22.5" (cobalt content: 22.5% by mass) manufactured by OMG, Inc. was employed.

As the steel cord, steel cords A and B of two types were employed. Steel cord A was a steel cord formed of brass-plated steel wire. Steel cord B was a steel cord formed of brass-plated steel wire and formed from steel wire to which a cobalt compound treatment had also been applied.

The rubber compositions A to D and steel cords A and B as above were combined to form non-pneumatic tires of Examples 1 to 6 and non-pneumatic tires of Comparative examples 1 to 5 shown in Tables 2 and 3.

In Tables 2 and 3, test results described later are also shown.

**[Table 2]**

| | | Example 1 | Example 2 | Example 3 | Example 4 | Example 5 | Example 6 |
|---|---|---|---|---|---|---|---|
| Structure of spiral reinforcing layer | Rubber composition | A | B | A | C | D | B |
| | Steel cord | A | A | B | B | B | B |
| Evaluation of running durability | | 100 | 680 | 300 | 110 | 100 | 1245 |

**[Table 3]**

| | | Comparative example 1 | Comparative example 2 | Comparative example 3 | Comparative example 4 | Comparative example 5 |
|---|---|---|---|---|---|---|
| Structure of spiral reinforcing layer | Rubber composition | None | None | C | D | None |
| | Steel cord | A | A | A | A | None |
| Evaluation of running durability | | 20 | 35 | 0 to 0.01 | 0 to 0.01 | 8 |

Here, in Examples 1 to 6 and Comparative examples 3 and 4, the spiral reinforcing layer 20 was formed as a single layer structure having the same shape as the non-pneumatic tire 1 shown in Figs. 1 to 5. In these non-pneumatic tires, the rubber composition was vulcanized and the steel cord was bonded to the ring-shaped body via the rubber composition. In Comparative example 1, the steel cord not covered with the rubber composition (covering body) was bonded to the ring-shaped body via an adhesive. In Comparative example 2, the steel cord not covered with the rubber composition (covering body) was heated and heat welded to the ring-shaped body. In Comparative example 5, the spiral reinforcing layer was not provided on the ring-shaped body.

In the non-pneumatic tires of Examples 1 to 6, when attention is paid to the presence or absence of the thiuram-based vulcanization accelerator and the cobalt compound, the results were as follows. That is, in Example 1, the cobalt compound was contained in the rubber composition. In Example 2, both the thiuram-based vulcanization accelerator and the cobalt compound were contained in the rubber composition. In Example 3, the cobalt compound was contained in the rubber composition and the cobalt compound treatment was applied to the steel cord. In Example 4, the thiuram-based vulcanization accelerator was contained in the rubber composition and the cobalt compound treatment was applied to the steel cord. In Example 5, the cobalt compound treatment was applied to the steel cord. In Example 6, both the thiuram-based vulcanization accelerator and the cobalt compound were contained in the rubber composition and the cobalt compound treatment was applied to the steel cord.

For each of the non-pneumatic tires of Examples 1 to 6 and Comparative examples 1 to 5, a running durability test was conducted under the same conditions. With the test result of the non-pneumatic tire of Example 1 taken as a reference value of 100, the test results of each non-pneumatic tire were evaluated as an index. The evaluation is shown in the bottom rows of Table 2 and 3. The higher the numerical values indicated, the better the running durability.

From these results, it was confirmed that the running durability in all of Examples 1 to 6 was significantly enhanced as compared with that in Comparative examples 1 to 5.

### [Industrial Applicability]

According to the present invention, durability of the non-pneumatic tire can be enhanced and the range of selection for a material or shape of members can be expanded.

### [Reference Signs List]

- 1: Non-pneumatic tire
- 11: Attachment body
- 13: Ring-shaped body (outer cylindrical body)
- 13a: Coupling portion
- 13b: Avoidance portion
- 15: Coupling member
- 16: Tread portion
- 20: Spiral reinforcing layer
- 41: Covering body
- 42: Cord
- 43: Element wire body

## Claims

1. A non-pneumatic tire (1) comprising:
an attachment body (11) attachable to an axle;
an outer cylindrical body (13) which surrounds the attachment body (11) from the outside in a tire radial direction;
a tread portion (16) which surrounds the outer cylindrical body (13) from the outside in the tire radial direction; and
a plurality of coupling members (15) which displaceably couple the attachment body (11) to the outer cylindrical body (13), wherein,
a spiral reinforcing layer (20) formed by spirally winding an element wire body (43) in which one cord (42) or a plurality of cords (42) parallel to each other are embedded in a covering body (41) on an outer circumferential surface of the outer cylindrical body (13) is bonded to the outer circumferential surface of the outer cylindrical body (13), the windings of the element wire body (43) being adjacent to each other in a tire width direction (H) on the outer circumferential surface of the outer cylindrical body (13),
the spiral reinforcing layer (20) is bonded at least to an outer circumferential surface of an avoidance portion (13b) in which a coupling portion (13a) with the coupling members (15) is avoided in the outer cylindrical body (13),
**characterised in that**
the spiral reinforcing layer (20) is bonded over the entire region of the outer circumferential surface of the outer cylindrical body (13); and
a portion of the spiral reinforcing layer (20) bonded to the outer circumferential surface of the avoidance portion (13b) of the outer cylindrical body (13) is thicker than other portions.

2. The non-pneumatic tire (1) according to claim 1, wherein:
the covering body (41) is formed of a rubber composition containing a thiuram-based vulcanization accelerator;
the cord is formed with a steel cord (42);
a cobalt compound is contained in the rubber composition or a cobalt compound treatment is applied to a surface of the steel cord (42); and
the spiral reinforcing layer (20) is vulcanization-bonded to the outer circumferential surface of the outer cylindrical body (13).

3. The non-pneumatic tire (1) according to claim 2, wherein a primer treatment is applied to form a primer layer on the outer circumferential surface of the outer cylindrical body (13).

4. The non-pneumatic tire (1) according to claim 3, wherein the primer layer is formed of a resorcin compound.

5. The non-pneumatic tire (1) according to claim 4, wherein 5 parts or more by mass of sulfur with respect to 100 parts by mass of the rubber component is mixed in the rubber composition.

6. The non-pneumatic tire (1) according to any one of claims 2 to 5, wherein the spiral reinforcing layer (20) is vulcanized at 110°C or less.

## Patentansprüche

1. Luftloser Reifen (1), der Folgendes umfasst:
einen Befestigungskörper (11), der an einer Achse befestigt werden kann,
einen äußeren zylindrischen Körper (13), der den Befestigungskörper (11) von der Außenseite in einer Reifenradialrichtung umgibt,
einen Laufflächenabschnitt (16), der den äußeren zylindrischen Körper (13) von der Außenseite in der Reifenradialrichtung umgibt, und
mehrere Verbindungselemente (15), die den Befestigungskörper (11) verschiebbar mit dem äußeren zylindrischen Körper (13) verbinden, wobei
eine spiralförmige Verstärkungslage (20), die durch spiralförmiges Wickeln eines Elementdrahtkörpers (43) geformt ist, in dem ein Kord (42) oder mehrere Kords (42) parallel zueinander in einem Überzugskörper (41) auf einer Außenumfangsfläche des äußeren zylindrischen Körpers (13) eingebettet sind, mit der Außenumfangsfläche des äußeren zylindrischen Körpers (13) verbunden ist, wobei die Windungen des Elementdrahtkörpers (43) einander in einer Reifenbreitenrichtung (H) auf der Außenumfangsfläche des äußeren zylindrischen Körpers (13) benachbart sind,
die spiralförmige Verstärkungslage (20) wenigstens mit einer Außenumfangsfläche eines Umgehungsabschnitts (13b) verbunden ist, in dem ein Verbindungsabschnitt (13a) mit dem Verbindungselementen (15) in dem äußeren zylindrischen Körper (13) umgangen wird,
**dadurch gekennzeichnet, dass**
die spiralförmige Verstärkungslage (20) über den gesamten Bereich der Außenumfangsfläche des äußeren zylindrischen Körpers (13) verbunden ist und
ein Abschnitt der spiralförmigen Verstärkungslage (20), der mit der Außenumfangsfläche des Umgehungsabschnitts (13b) des äußeren zylindrischen Körpers (13) verbunden ist, dicker ist als andere Abschnitte.

2. Luftloser Reifen (1) nach Anspruch 1, wobei:
der Überzugskörper (41) aus einer Kautschukzusammensetzung geformt ist, die einen Vulkanisationsbeschleuniger auf Thiurambasis enthält,
der Kord mit einem Stahlkord (42) geformt ist,
eine Kobaltverbindung in der Kautschukzusammensetzung enthalten ist oder eine Kobaltverbindungsbehandlung auf eine Oberfläche des Stahlkords (42) angewendet ist und
die spiralförmige Verstärkungslage (20) durch Vulkanisation mit der Außenumfangsfläche des äußeren zylindrischen Körpers (13) verbunden ist.

3. Luftloser Reifen (1) nach Anspruch 2, wobei eine Grundierungsbehandlung angewendet ist, um eine Grundierungslage auf der Außenumfangsfläche des äußeren zylindrischen Körpers (13) zu bilden.

4. Luftloser Reifen (1) nach Anspruch 3, wobei die Grundierungslage aus einer Resorcinverbindung gebildet ist.

5. Luftloser Reifen (1) nach Anspruch 4, wobei 5 oder mehr Masseanteile an Schwefel in Bezug auf 100 Masseanteile der Kautschukkomponente in der Kautschukzusammensetzung vermischt sind.

6. Luftloser Reifen (1) nach einem der Ansprüche 2 bis 5, wobei die spiralförmige Verstärkungslage (20) bei 110°C oder weniger vulkanisiert ist.

## Revendications

1. Bandage pneumatique sans air (1), comprenant :
un corps de fixation (11) pouvant être fixé sur un essieu ;
un corps cylindrique externe (13) entourant le corps de fixation (11) de l'extérieur, dans une direction radiale du bandage pneumatique ;
une partie de bande de roulement (16) entourant le corps cylindrique externe (13) de l'extérieur, dans la direction radiale du bandage pneumatique ; et
plusieurs éléments de raccordement (15) raccordant le corps de fixation (11) et le corps cylindrique externe (13), d'une manière permettant un déplacement ; dans lequel
une couche de renforcement en spirale (20) formée en enroulant en spirale un corps d'un élément métallique (43) dans lequel un câblé (42) ou plusieurs câblés (42) parallèles les uns aux autres sont noyés dans un corps de couverture (41) sur une surface circonférentielle externe du corps cylindrique externe (13), est reliée à la surface circonférentielle externe du corps cylindrique externe (13), les enroulements du corps d'élément métallique (43) étant adjacents les uns aux autres dans une direction de la largeur du bandage pneumatique (H) sur la surface circonférentielle externe du corps cylindrique externe (13) ;
la couche de renforcement en spirale (20) est reliée à au moins une surface circonférentielle externe d'une partie d'évitement (13b) dans laquelle une partie de raccordement (13a) aux éléments de raccordement (15) est évitée dans le corps cylindrique externe (13) ;
**caractérisé en ce que**
la couche de renforcement en spirale (20) est reliée au-delà de l'ensemble de la région de la surface circonférentielle externe du corps cylindrique externe (13) ; et
une partie de la couche de renforcement en spirale (20) reliée à la surface circonférentielle externe de la partie d'évitement (13b) du corps cylindrique externe (13) est plus épaisse que d'autres parties.

2. Bandage pneumatique sans air (1) selon la revendication 1, dans lequel :
le corps de couverture (41) est composé d'une composition de caoutchouc contenant un accélérateur de vulcanisation à base de thiurame ;
le câblé est formé par un câblé en acier (42) ;
un composé de cobalt est contenu dans la composition de caoutchouc ou un traitement avec un composé de cobalt est appliqué à une surface du câblé en acier (42) ; et
la couche de renforcement en spirale (20) est reliée par vulcanisation à la surface circonférentielle externe du corps cylindrique externe (13).

3. Bandage pneumatique sans air (1) selon la revendication 2, dans lequel un traitement d'apprêt est appliqué pour former une couche d'apprêt sur la surface circonférentielle externe du corps cylindrique externe (13).

4. Bandage pneumatique sans air (1) selon la revendication 3, dans lequel la couche d'apprêt est composée d'un composé de résorcine.

5. Bandage pneumatique sans air (1) selon la revendication 4, dans lequel 5 parties ou plus en poids de soufre par rapport à 100 parties en poids du composant de caoutchouc sont mélangées dans la composition de caoutchouc.

6. Bandage pneumatique sans air (1) selon l'une quelconque des revendications 2 à 5, dans lequel la couche de renforcement en spirale (20) est vulcanisée à 110°C ou moins.
